# EUROPEAN PATENT APPLICATION

(11) **EP 4 181 016 A1**
(43) Date of publication of application: **17.05.2023**
(21) Application number: 21850187.2
(22) Date of filing: 20.07.2021
(51) Int. Cl.: G06K 9/00

(54) **IMAGE PROCESSING METHOD, ELECTRONIC DEVICE, IMAGE PROCESSING SYSTEM AND CHIP SYSTEM**

(30) Priority: 28.07.2020 CN 202010742689
(71) Applicant: Huawei Technologies Co., Ltd., Shenzhen, Guangdong 518129 (CN)
(72) Inventor: XU, Yanqing, Shenzhen, Guangdong 518129 (CN); WANG, Sihai, Shenzhen, Guangdong 518129 (CN)
(74) Representative: Huawei European IPR
(86) International application number: PCT/CN2021/107246
(87) International publication number: WO 2022/022319

(57) **Abstract**

This application relates to the field of image processing technologies, and provides an image processing method, an electronic device, an image processing system, and a chip system, to resolve a problem that an image processing effect of a feature analysis network model in a multi-task deep neural network model is poor. A first device extracts feature information of a to-be-processed image by using a feature extraction network model; the first device identifies the extracted feature information, to obtain identification information of the feature information; and the first device sends the feature information of the to-be-processed image and the identification information of the feature information to a second device. After receiving the feature information and the corresponding identification information that are sent by the first device, the second device selects a feature analysis network model corresponding to the identification information to process the received feature information, so as to obtain an image processing result.

## Description

This application claims priority to Chinese Patent Application No. 202010742689.0, filed with the China National Intellectual Property Administration on July 28, 2020 and entitled "IMAGE PROCESSING METHOD, ELECTRONIC DEVICE, IMAGE PROCESSING SYSTEM, AND CHIP SYSTEM", which is incorporated herein by reference in its entirety.

### TECHNICAL FIELD

Embodiments of this application relate to the image processing field, and in particular, to an image processing method, an electronic device, an image processing system, and a chip system.

### BACKGROUND

With development of deep learning theories, image processing based on a deep neural network model also develops rapidly. For example, a feature of an image may be extracted by using the deep neural network model, and then the feature of the image is analyzed to complete image processing. The image processing may include target detection, semantic segmentation, panoptic segmentation, image classification, and the like.

A deep learning-based deep neural network model may be divided into two parts from a perspective of functions: a feature extraction network model and a feature analysis network model. The feature extraction network model is used to extract a feature of an image. The feature analysis network model is used to analyze and process a feature of an image, to complete a corresponding image processing task. In a multi-task image processing process, a plurality of different feature analysis network models may share a same feature extraction network model, to reduce a parameter of the deep neural network model and reduce a task quantity of training the deep neural network model. However, image features used by the plurality of different feature analysis network models may be different, and image features extracted by sharing the same feature extraction network model cannot take all feature analysis network models into account. As a result, an image processing effect of the feature analysis network model is poor.

### SUMMARY

Embodiments of this application provide an image processing method, an electronic device, an image processing system, and a chip system, to resolve a problem that an image processing effect of a feature analysis network model in a multi-task deep neural network model is poor.

To achieve the foregoing objective, the following technical solutions are used in this application.

According to a first aspect, an image processing method is provided, and includes: A first device extracts feature information of a to-be-processed image by using at least one pre-stored feature extraction network model; the first device identifies the extracted feature information, to obtain identification information of the feature information; and the first device sends the feature information of the to-be-processed image and the identification information of the feature information to a second device, to indicate the second device to select a feature analysis network model corresponding to the identification information to process the feature information.

In this embodiment of this application, after identifying the extracted feature information to obtain the identification information, the first device may indicate the second device that has a plurality of feature analysis network models to select, based on the identification information, the feature analysis network model corresponding to the identification information to process the received feature information. In the method, the feature analysis network model in the second device may correspond to the feature extraction network model in a plurality of first devices, or correspond to a plurality of feature extraction network models in the first device. When there are a plurality of first devices or there are a plurality of feature extraction network models in the first device, the plurality of feature analysis network models in the second device may determine, based on the identification information, a feature analysis network model to input the feature information to complete a corresponding image processing task. This avoids a problem that an image processing effect is poor because feature information of a same feature extraction network model cannot simultaneously meet requirements of the plurality of feature analysis network models.

In a possible implementation of the first aspect, that the first device identifies the extracted feature information, to obtain identification information of the feature information includes: The first device obtains an identifier of a feature extraction network model used to extract the feature information; and the first device uses the identifier of the feature extraction network model used to extract the feature information as the identification information of the feature information.

In some examples, the identifier of the feature extraction network model used to extract the feature information may be used as the identification information of the feature information. The second device may determine, based on the identification information of the feature information, the feature extraction network model used to extract the feature information, to select a proper feature analysis network model to analyze the received feature information, so as to complete a corresponding image processing task.

In a possible implementation of the first aspect, that the first device identifies the extracted feature information, to obtain identification information of the feature information includes: The first device obtains an identifier of an output layer of the feature information, where the output layer of the feature information is a layer at which the feature information is output in the feature extraction network model used to extract the feature information; and the first device uses the identifier of the output layer of the feature information as the identification information of the feature information.

In some examples, the identifier of the output layer of the feature information may be used as the identification information of the feature information. The second device may determine, based on the identification information of the feature information, the output layer of the feature information, to select a proper feature analysis network model to analyze the received feature information, so as to complete a corresponding image processing task.

In a possible implementation of the first aspect, that the first device identifies the extracted feature information, to obtain identification information of the feature information includes: The first device obtains an identifier of a feature extraction network model used to extract the feature information; the first device obtains an identifier of an output layer of the feature information, where the output layer of the feature information is a layer at which the feature information is output in the feature extraction network model used to extract the feature information; and the first device uses the identifier of the feature extraction network model used to extract the feature information and the identifier of the output layer of the feature information as the identification information of the feature information.

In some examples, the identifier of the feature extraction network model used to extract the feature information and the identifier of the output layer of the feature information as the identification information of the feature information. The second device may determine, based on the identification information of the feature information, the feature extraction network model and output layer of the feature information, to select a proper feature analysis network model to analyze the received feature information, so as to complete a corresponding image processing task.

In actual application, any one of the foregoing enumerated identification information generation methods may be selected based on an actual requirement, to improve flexibility of applying this embodiment of this application.

According to a second aspect, an image processing method is provided, and includes: A second device obtains feature information of a to-be-processed image and identification information of the feature information that are sent by a first device connected to the second device; the second device determines, based on the identification information of the feature information, a feature analysis network model for processing the feature information; and the second device inputs the feature information of the to-be-processed image to the determined feature analysis network model, to obtain an image processing result.

In a possible implementation of the second aspect, that the second device determines, based on the identification information of the feature information, a feature analysis network model for processing the feature information includes: The second device obtains a correspondence between the identification information and the feature analysis network model; and the second device uses, based on the correspondence, a feature analysis network model corresponding to the identification information of the feature information as the feature analysis network model for processing the feature information.

In a possible implementation of the second aspect, the identification information of the feature information includes: an identifier of a feature extraction network model used to extract the feature information; and/or an identifier of an output layer of the feature information, where the output layer of the feature information is a layer at which the feature information is output in the feature extraction network model used to extract the feature information.

According to a third aspect, an electronic device is provided, and includes:
a feature information extraction unit, configured to extract feature information of a to-be-processed image by using at least one pre-stored feature extraction network model;
an identification information generation unit, configured to identify the extracted feature information, to obtain identification information of the feature information; and
an information sending unit, configured to send the feature information of the to-be-processed image and the identification information of the feature information to a second device, to indicate the second device to select a feature analysis network model corresponding to the identification information to process the feature information.

According to a fourth aspect, an electronic device is provided, and includes:
an information obtaining unit, configured to obtain feature information of a to-be-processed image and identification information of the feature information that are sent by a connected first device;
a model determining unit, configured to determine, based on the identification information of the feature information, a feature analysis network model for processing the feature information; and
an image processing unit, configured to input the feature information of the to-be-processed image to the determined feature analysis network model, to obtain an image processing result.

According to a fifth aspect, an electronic device is provided, and includes a processor. The processor is configured to run a computer program stored in a memory, to implement the method according to any one of the first aspect of this application.

According to a sixth aspect, an electronic device is provided, and includes a processor. The processor is configured to run a computer program stored in a memory, to implement the method according to any one of the second aspect of this application.

According to a seventh aspect, an image processing system is provided, and includes at least one electronic device according to the fifth aspect and at least one electronic device according to the sixth aspect.

According to an eighth aspect, a chip system is provided, and includes a processor. The processor is coupled to a memory, and the processor executes a computer program stored in the memory, to implement the method according to any one of the first aspect and/or any one of the second aspect of this application.

According to a ninth aspect, a computer-readable storage medium is provided. The computer-readable storage medium stores a computer program, and when the computer program is executed by one or more processors, the method according to any one of the first aspect and/or any one of the second aspect of this application is implemented.

According to a tenth aspect, a computer program product is provided. When the computer program product runs on a device, the device is enabled to perform the method according to any one of the first aspect and/or any one of the second aspect.

It may be understood that for beneficial effects of the second aspect to the tenth aspect, refer to related descriptions in the first aspect. Details are not described herein again.

### BRIEF DESCRIPTION OF DRAWINGS

FIG. 1 is a schematic diagram of an application scenario of an image processing method according to an embodiment of this application;
FIG. 2 is an example diagram of an image processing method according to an embodiment of this application;
FIG. 3 is another example diagram of an image processing method according to an embodiment of this application;
FIG. 4 is a schematic diagram of a hardware structure of an electronic device performing an image processing method according to an embodiment of this application;
FIG. 5 is a schematic diagram of a processing process in which a first device and a second device perform an image processing method according to an embodiment of this application;
FIG. 6 is a schematic flowchart in which a first device performs an image processing method according to an embodiment of this application;
FIG. 7 is a schematic diagram of a correspondence between identification information and a feature analysis network model in an image processing method according to an embodiment of this application;
FIG. 8 is another schematic diagram of a correspondence between identification information and a feature analysis network model in an image processing method according to an embodiment of this application;
FIG. 9 is another schematic diagram of a correspondence between identification information and a feature analysis network model in an image processing method according to an embodiment of this application;
FIG. 10 is a schematic flowchart in which a second device performs an image processing method according to an embodiment of this application; and
FIG. 11 is a schematic block diagram of functional architecture modules of a first device and a second device according to an embodiment of this application.

### DESCRIPTION OF EMBODIMENTS

In the following descriptions, for description instead of limitation, specific details such as a particular system structure and a technology are provided to facilitate a thorough understanding of embodiments of this application. However, a person skilled in the art should know that this application may also be implemented in other embodiments without these specific details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. A character "/" generally indicates an "or" relationship between associated objects.

In addition, in the descriptions of the specification and appended claims of this application, the terms "first", "second", "third", and the like are merely used for distinction and description, but shall not be understood as an indication or an implication of relative importance.

Referring to "an embodiment", "some embodiments", or the like in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of the embodiments", unless otherwise specifically emphasized. The terms "include", "have", and their variants all mean "include but are not limited to", unless otherwise specifically emphasized in another manner.

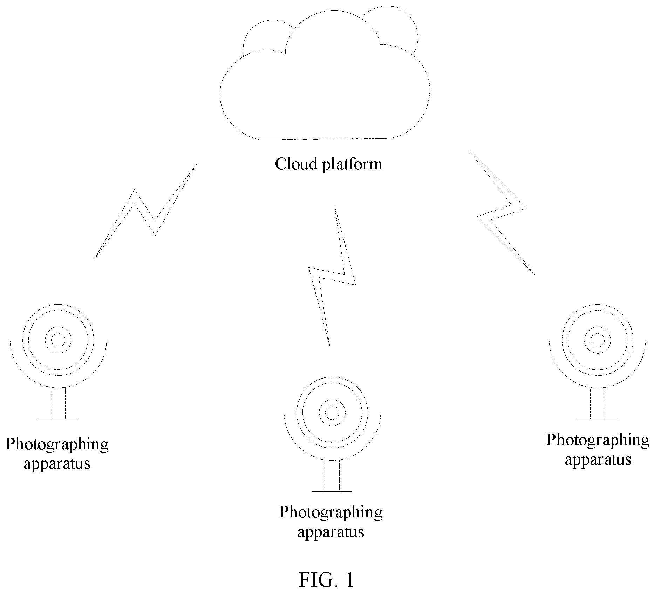

Embodiments of this application may be applied to an application scenario of a plurality of image processing tasks. An image processing process includes an image feature extraction process and an image feature analysis process. FIG. 1 is an application scenario of an image processing method according to an embodiment of this application. As shown in FIG. 1, there may be a plurality of photographing apparatuses that execute an image feature extraction process corresponding to a cloud platform that executes an image feature analysis process. Only three photographing apparatuses are shown in the figure. In actual application, more or fewer photographing apparatuses may be disposed. In an example of the application scenario, these photographing apparatuses are disposed on different roads. In another example of the application scenario, these photographing apparatuses are disposed in a factory, for example, disposed in a workshop, an office, an entrance and exit gate, and an entrance and exit of a garage of the factory. For these photographing apparatuses, some or all of the photographing apparatuses may store a feature extraction network model. After the photographing apparatuses collect a video and/or an image, the feature extraction network model in the photographing apparatuses may extract feature information of an image frame in the video and/or feature information of the image, the photographing apparatuses send the feature information to the cloud platform, and the cloud platform selects, based on the to-be-executed image processing task, a proper feature analysis network model to process the received feature information.

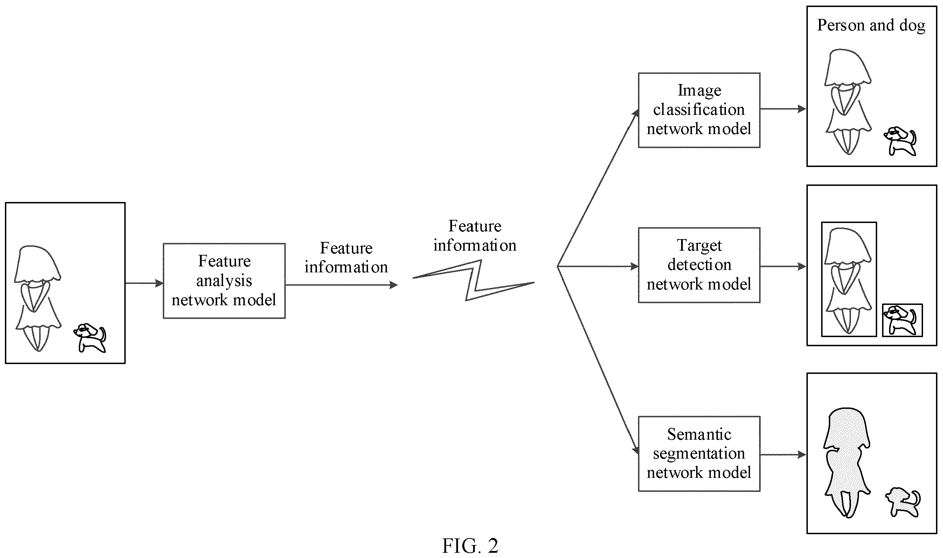

In the foregoing application scenario, image processing may be performed according to an example of an image processing method shown in FIG. 2. In the example shown in FIG. 2, a plurality of feature analysis network models (for example, an image classification network model, a target detection network model, and a semantic segmentation network model in the figure) share one feature extraction network model. The feature extraction network model may be loaded in each photographing apparatus, and the plurality of feature analysis network models may be loaded in the cloud platform. The plurality of feature analysis network models in the cloud platform share feature information extracted by one feature extraction network model in the photographing apparatuses. The photographing apparatuses and the cloud platform may establish a communication connection in a wireless manner.

If the image processing is performed according to the image processing method shown in FIG. 2, the following problems may exist.
(1) To adapt to requirements of the feature analysis network models in the cloud platform, the feature extraction network model in the photographing apparatuses may need to be updated. When the feature extraction network model in the photographing apparatuses needs to be updated, because there are many photographing apparatuses and the photographing apparatuses are distributed in a wide range (for example, photographing apparatuses on urban roads), update costs are very high. As a result, flexibility of deployment and update in an application process of the image processing method according to the example shown in FIG. 2 is poor.
(2) To adapt to a requirement of a feature analysis network model newly added to the cloud platform, when a new feature extraction network model with better performance is added to the photographing apparatuses, it is very likely that an original feature analysis network model cannot identify feature information extracted by the newly added feature extraction network model, consequently, some feature analysis network models in the cloud platform cannot complete an image processing task or have a poor image processing effect, that is, it cannot be ensured that a same feature extraction network model is completely suitable for all feature analysis network models.
(3) For different image processing tasks in the cloud platform, a feature analysis network model used for target detection may require a high-performance feature extraction network model, and it is unnecessary for a feature analysis network model used for image classification to use the high-performance feature extraction network model. To take the feature analysis network model with the high requirement into account, the high-performance feature analysis network model is used. As a result, problems such as a large calculation amount and severe memory consumption are caused each time the photographing apparatuses perform feature extraction.

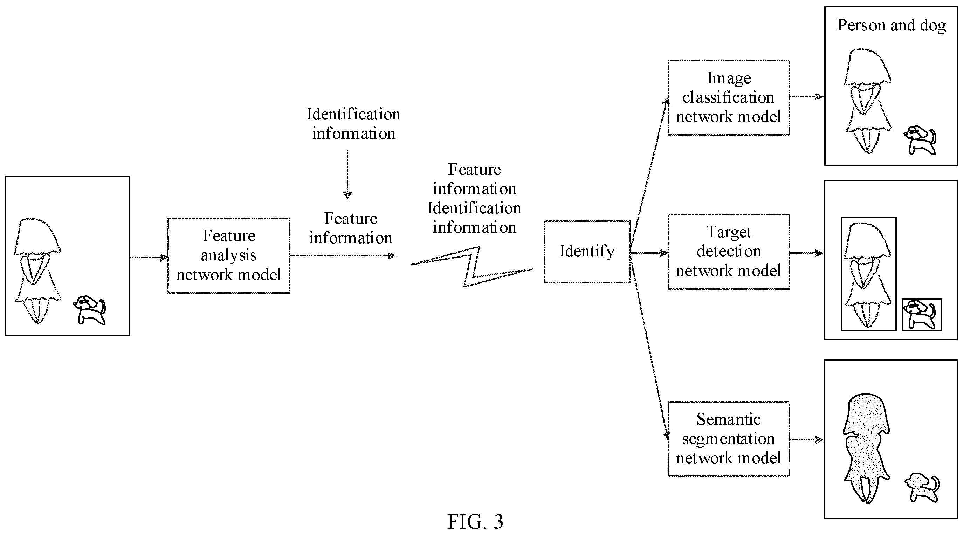

To resolve the foregoing problems existing in the example shown in FIG. 2, an example of an image processing method shown in FIG. 3 may be further used. As shown in FIG. 3, different feature extraction network models may be set for each photographing apparatus based on an application scenario. For example, an image collected by a photographing apparatus disposed at an entrance and exit of a factory garage is mainly used for vehicle detection. Therefore, a feature extraction network model suitable for the vehicle detection may be loaded in the photographing apparatus disposed at the entrance or exit of the garage. An image collected by a photographing apparatus disposed at an entrance and exit gate of a factory is mainly used for facial recognition. Therefore, a feature extraction network model suitable for the facial recognition may be loaded in the photographing apparatus disposed at the entrance and exit gate of the factory. A feature analysis network model suitable for the vehicle detection and a feature extraction network model suitable for the facial recognition may be loaded in the cloud platform. The cloud platform may receive feature information sent by the photographing apparatus disposed at the entrance and exit gate of the factory, or may receive feature information sent by the photographing apparatus disposed at the entrance and exit of the factory garage. To help the cloud platform input the feature information to a proper feature analysis network model to complete a corresponding image processing task, identification information may be generated for the feature information after the feature information of the image is extracted from the photographing apparatus. For example, a rule is preset: an identifier of the feature extraction network model suitable for the vehicle detection is 0, and an identifier of the feature extraction network model suitable for the facial recognition is 1. After obtaining the feature information, the photographing apparatus may further generate the identification information of the feature information based on the identifier of the feature extraction network model. The photographing apparatus sends the feature information and the identification information of the feature information to the cloud platform. The cloud platform may identify the identification information of the received feature information, and then select, based on the identification information of the received feature information, a proper feature analysis network model to process the received feature information, to obtain an image processing result.

For example, there are three photographing apparatuses corresponding to the cloud platform that executes the image feature analysis process. A feature extraction network model in a first photographing apparatus is a model 1, extracted feature information is feature information A, and corresponding identification information is 00. A feature extraction network model in a second photographing apparatus is a model 2, extracted feature information is feature information B, and corresponding identification information is 01. A feature extraction network model in a third photographing apparatus is a model 3, extracted feature information is feature information C, and corresponding identification information is 10.

The cloud platform may store three feature analysis network models: a model *α* for executing an image classification task, a model *β* for executing a target detection task, and a model Y for executing a semantic segmentation task.

A correspondence between the photographing apparatus, the feature extraction network model stored in the photographing apparatus, the identification information, the image processing task, and the feature analysis network model stored in the cloud platform is as follows:
a first photographing apparatus-a model 1-identification information 00-an image classification task-a model *α* ;
a second photographing apparatus-a model 2-identification information 01-a target detection task-a model *β* ; and
a third photographing apparatus-a model 3-identification information 10-a semantic segmentation task-a model Y.

In an example, these photographing apparatuses autonomously send the extracted feature information and identification information to the cloud platform. The cloud platform may input, based on the foregoing correspondence, the feature information whose identification information is 00 to the model *α* corresponding to the identification information 00, to complete the image classification task. The cloud platform may input, based on the foregoing correspondence, the feature information whose identification information is 01 to the model *β* corresponding to the identification information 01, to complete the target detection task. The cloud platform may input, based on the foregoing correspondence, the feature information whose identification information is 10 to the model Y corresponding to the identification information 10, to complete the semantic segmentation task.

In another example, when a user needs to perform the image classification task, the user sends an instruction for executing the image classification task to the cloud platform. The cloud platform sends, based on the foregoing correspondence, a feature extraction instruction to the first photographing apparatus corresponding to the image classification task. The first photographing apparatus inputs a collected image to the model 1 to obtain feature information, and generates the identification information 00 of the feature information. The first photographing apparatus sends the feature information and the identification information 00 to the cloud platform. After receiving the feature information and the identification information 00, the cloud platform inputs the feature information to the model *α* corresponding to the identification information 00, to complete the image classification task.

In another example, when the user needs to perform the semantic segmentation task, the user determines, based on the foregoing correspondence, to execute an image feature extraction process by using the third photographing apparatus, and the user sends an execution instruction to the third photographing apparatus. The third photographing apparatus obtains feature information of a to-be-processed image by using the model 3, and generates the identification information 10 of the feature information. The third photographing apparatus sends the feature information and the identification information 10 to the cloud platform. After the cloud platform receives the feature information and the identification information 10, the cloud platform inputs the feature information to the model *γ* corresponding to the identification information 10, to complete the semantic segmentation task.

In the foregoing three examples, each photographing apparatus may store a feature extraction network model. In actual application, each photographing apparatus may also store a plurality of feature extraction network models.

According to the image processing method shown in FIG. 3, when a network model needs to be updated, a new feature extraction network model may be added to one or more photographing apparatuses that need to be updated, or an old feature extraction network model may be replaced with the new feature extraction network model, and a unique identifier of the feature extraction network model is correspondingly set. It is unnecessary to add the new feature extraction network model to or replace old feature extraction network models with the new feature extraction network model in each photographing apparatus that has a network connection relationship with the cloud platform. Therefore, the image processing method shown in FIG. 3 increases flexibility and scalability of network update or deployment. For ease of description, an electronic device in which the feature extraction network model is located is denoted as a first device, and steps performed by the first device are denoted as the image feature extraction process. An electronic device in which the feature analysis network model is located is denoted as a second device, and steps performed by the second device is denoted as the image feature analysis process. The first device and the second device jointly complete the image processing method.

In addition, in the application scenario shown in FIG. 1, an image processing system includes a plurality of first devices and one second device. In actual application, the image processing system may also include one first device and one second device. The image processing system may further include one first device and a plurality of second devices, and the image processing system may further include a plurality of first devices and a plurality of second devices. When there are a plurality of second devices, the first device may determine, based on the identification information of the feature information, to send the feature information and the identification information of the feature information to a corresponding second device.

For example, when the image processing system includes a plurality of first devices and a plurality of second devices, a correspondence between the first device, the feature extraction network model stored in the first device, the identification information, the image processing task, the second device, and the feature analysis network model stored in the second device is as follows:
a first photographing apparatus-a model 1-identification information 00-an image classification task-a cloud platform 1-a model *α* ;
a second photographing apparatus-a model 2-identification information 01-a target detection task-a server 2-a model *β* ; and
a third photographing apparatus-a model 3-identification information 10-a semantic segmentation task-a cloud platform 1-a model *γ*.

In this example, after extracting the feature information of the image by using the model 1, the first photographing apparatus generates the identification information 00, and sends the feature information and the identification information 00 to the cloud platform 1. The cloud platform 1 inputs the feature information of the identification information 00 to the model *α* . After extracting the feature information of the image by using the model 2, the first photographing apparatus generates the identification information 01, and sends the feature information and the identification information 01 to the server 2. The server 2 inputs the feature information of the identification information 01 to the model *β.*

Certainly, in this example, the image processing task may also be performed in the following manner: The first photographing apparatus extracts a group of feature information of the image by using the model 1, and generates the identification information 00. The first photographing apparatus extracts a group of feature information of an image by using the model 2, and generates the identification information 01. The first photographing apparatus sends both the two groups of feature information and corresponding identification information to the cloud platform 1 and the server 2. The cloud platform 1 selects the feature information of the identification information 00 from the received two groups of feature information, and inputs the feature information to the model *α* , and the server 2 selects the feature information of the identification information 01 from the received two groups of feature information, and inputs the feature information to the model *β* .

Based on the foregoing example, it may be understood that the image processing system may include at least one second device. The second device may store a plurality of feature analysis network models, or may store one feature analysis network model.

It should be noted that the photographing apparatus and the cloud platform in the foregoing application scenario and corresponding examples are merely used as examples of the first device and the second device. In actual application, the first device may be another electronic device other than the photographing apparatus, and the second device may also be another electronic device other than the cloud platform.

For example, the image processing method provided in this embodiment of this application may be applicable to the first device. The first device may be an electronic device with a camera, such as a photographing apparatus, a mobile phone, or a tablet computer. Certainly, the first device may not have a camera, but receives an image or a video sent by another electronic device having a camera. The image processing method provided in this embodiment of this application may be further applicable to the second device. The second device may be an electronic device having an image feature analysis capability, such as a cloud platform, a server, a computer, a notebook computer, or a mobile phone. Certainly, in actual application, the first device and the second device may be a same electronic device. For example, both the first device and the second device may be a mobile phone. Both the image feature extraction process and the image feature analysis process are executed in a processor of the mobile phone, or the image feature extraction process is executed in a first processor of the mobile phone, and the image feature analysis process is executed in a second processor of the mobile phone. At least one first device and one second device form the image processing system.

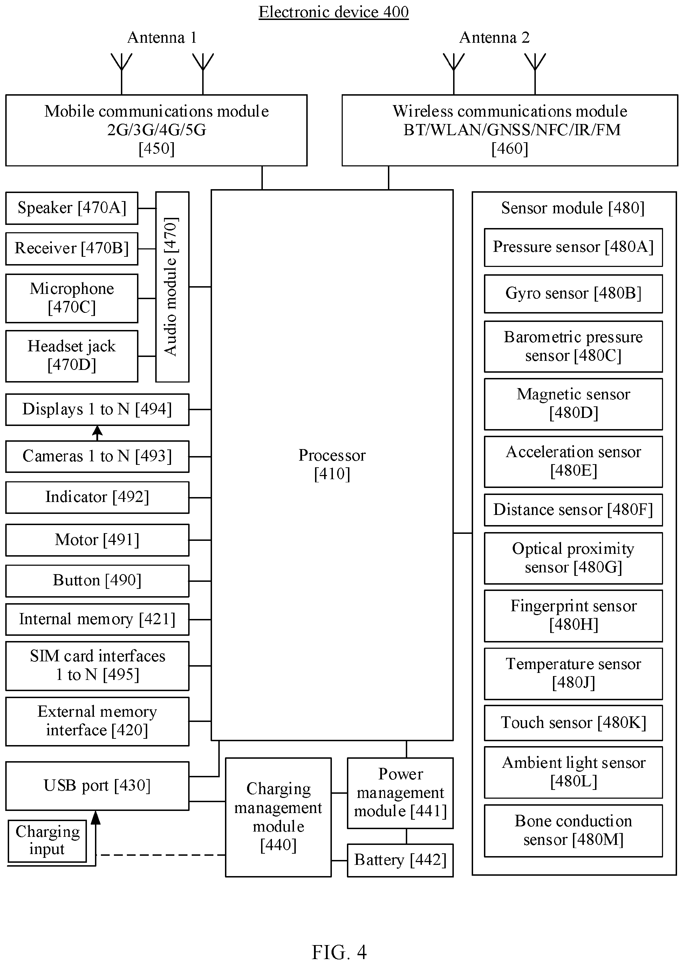

FIG. 4 is a schematic diagram of a structure of an electronic device. The electronic device may be used as a first device to perform an image feature extraction process in an image processing method, or may be used as a second device to perform an image feature analysis process in an image processing method, or may further be used as an electronic device to perform an image feature extraction process and an image feature analysis process in an image processing method. An electronic device 400 may include a processor 410, an external memory interface 420, an internal memory 421, a universal serial bus (universal serial bus, USB) port 430, a charging management module 440, a power management module 441, a battery 442, an antenna 1, an antenna 2, a mobile communications module 450, a wireless communications module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyro sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that the structure shown in this embodiment of this application does not constitute a specific limitation on the electronic device 400. In some other embodiments of this application, the electronic device 400 may include more or fewer components than those shown in the figure, or combine some components, or split some components, or have different component arrangements. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. For example, the processor 410 is configured to perform the image feature extraction process in the image processing method in this embodiment of this application, for example, the following step 601 to step 603, and/or perform the image feature analysis process in the image processing method in this embodiment of this application, for example, the following step 1001 to step 1003.

The controller may be a nerve center and a command center of the electronic device 400. The controller may generate an operation control signal based on an instruction operation code and a time sequence signal, to complete control of instruction fetching and instruction execution.

A memory may be disposed in the processor 410, and is configured to store instructions and data. In some embodiments, the memory in the processor 410 is a cache. The memory may store instructions or data that has been used or cyclically used by the processor 410. If the processor 410 needs to use the instructions or the data again, the processor 410 may directly invoke the instructions or the data from the memory. This avoids repeated access, reduces waiting time of the processor 410, and improves system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 410 may include a plurality of groups of I2C buses. The processor 410 may be separately coupled to the touch sensor 480K, a charger, a flash, the camera 493, and the like through different I2C bus interfaces. For example, the processor 410 may be coupled to the touch sensor 480K through the I2C interface, so that the processor 410 communicates with the touch sensor 480K through the I2C bus interface, to implement a touch function of the electronic device 400.

The I2S interface may be configured to perform audio communication. In some embodiments, the processor 410 may include a plurality of groups of I2S buses. The processor 410 may be coupled to the audio module 470 through the I2S bus, to implement communication between the processor 410 and the audio module 470.

The PCM interface may also be used to perform audio communication, and sample, quantize, and code an analog signal. In some embodiments, the audio module 470 may be coupled to the wireless communications module 460 through a PCM bus interface.

The UART interface is a universal serial data bus, and is configured to perform asynchronous communication. The bus may be a two-way communications bus. The bus converts to-be-transmitted data between serial communications and parallel communications.

The MIPI interface may be configured to connect the processor 410 to a peripheral component such as the display 494 or the camera 493. The MIPI interface includes a camera serial interface (camera serial interface, CSI), a display serial interface (display serial interface, DSI), and the like. In some embodiments, the processor 410 communicates with the camera 493 through the CSI, to implement a photographing function of the electronic device 400. The processor 410 communicates with the display 494 through the DSI, to implement a display function of the electronic device 400.

The GPIO interface may be configured by software. The GPIO interface may be configured as a control signal or a data signal. In some embodiments, the GPIO interface may be configured to connect the processor 410 to the camera 493, the display 494, the wireless communications module 460, the audio module 470, the sensor module 480, or the like. The GPIO interface may alternatively be configured as the I2C interface, the I2S interface, the UART interface, the MIPI interface, or the like.

The USB port 430 is a port that conforms to a USB standard specification, and may be specifically a mini USB port, a micro USB port, a USB Type-C port, or the like. The USB port 430 may be configured to connect to a charger to charge the electronic device 400, or may be configured to perform data transmission between the electronic device 400 and a peripheral device. The USB port 430 may alternatively be configured to connect to a headset, to play an audio through the headset. The port may be further configured to connect to another electronic device such as an AR device.

It may be understood that an interface connection relationship between the modules shown in this embodiment of this application is merely an example for description, and constitutes no limitation on the structure of the electronic device 400. In some other embodiments of this application, the electronic device 400 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input of the wired charger through the USB port 430. In some embodiments of wireless charging, the charging management module 440 may receive a wireless charging input through a wireless charging coil of the electronic device 400. The charging management module 440 supplies power to the electronic device by using the power management module 441 while charging the battery 442.

The power management module 441 is configured to connect the battery 442, the charging management module 440, and the processor 410. The power management module 441 receives an input of the battery 442 and/or the charging management module 440, to supply power to the processor 410, the internal memory 421, an external memory, the display 494, the camera 493, the wireless communications module 460, and the like. The power management module 441 may be further configured to monitor parameters such as a battery capacity, a battery cycle count, and a battery health status (electricity leakage or impedance).

In some other embodiments, the power management module 441 may alternatively be disposed in the processor 410. In some other embodiments, the power management module 441 and the charging management module 440 may alternatively be disposed in a same device.

A wireless communication function of the electronic device 400 may be implemented by using the antenna 1, the antenna 2, the mobile communications module 450, the wireless communications module 460, the modem processor, the baseband processor, and the like.

The antenna 1 and the antenna 2 are configured to transmit and receive an electromagnetic wave signal. Each antenna in the electronic device 400 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 450 may provide a wireless communication solution that includes 2G/3G/4G/5G or the like and that is applied to the electronic device 400. The mobile communications module 450 may include at least one filter, a switch, a power amplifier, a low noise amplifier (low noise amplifier, LNA), and the like. The mobile communications module 450 may receive an electromagnetic wave by using the antenna 1, perform processing such as filtering and amplification on the received electromagnetic wave, and transmit the electromagnetic wave to the modem processor for demodulation. The mobile communications module 450 may further amplify a signal modulated by the modem processor, and convert the signal into an electromagnetic wave by using the antenna 1 for radiation.

In some embodiments, at least some functional modules in the mobile communications module 450 may be disposed in the processor 410. In some embodiments, at least some functional modules of the mobile communications module 450 may be disposed in a same device as at least some modules of the processor 410.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 470A, the receiver 470B, or the like), or displays an image or a video by using the display 494. In some embodiments, the modem processor may be an independent device. In some other embodiments, the modem processor may be independent of the processor 410, and is disposed in a same component as the mobile communications module 450 or another functional module.

The wireless communications module 460 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 400. The wireless communications module 460 may be one or more components integrating at least one communications processing module. The wireless communications module 460 receives an electromagnetic wave through the antenna 2, performs frequency modulation and filtering processing on the electromagnetic wave signal, and sends a processed signal to the processor 410. The wireless communications module 460 may further receive a to-be-sent signal from the processor 410, perform frequency modulation and amplification on the signal, and convert the signal into an electromagnetic wave by using the antenna 2 for radiation.

In some embodiments, in the electronic device 400, the antenna 1 and the mobile communications module 450 are coupled, and the antenna 2 and the wireless communications module 460 are coupled, so that the electronic device 400 can communicate with a network and another device by using a wireless communications technology. The wireless communications technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 400 implements a display function by using the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 400 may include one or N displays 494, where N is a positive integer greater than 1.

The electronic device 400 may implement a photographing function by using the ISP, the camera 493, the video codec, the GPU, the display 494, the application processor, and the like.

The ISP is configured to process data fed back by the camera 493. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 493.

The camera 493 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 400 may include one or N cameras 493, where N is a positive integer greater than 1.

The digital signal processor is configured to process a digital signal, and may process another digital signal in addition to processing the digital image signal. For example, when the electronic device 400 selects a frequency, the digital signal processor is configured to perform Fourier transform on frequency energy, and the like.

The video codec is configured to compress or decompress a digital video. The electronic device 400 may support one or more video codecs. In this way, the electronic device 400 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as intelligent cognition of the electronic device 400 may be implemented by using the NPU, for example, image recognition, facial recognition, speech recognition, and text understanding.

In this embodiment of this application, the NPU or another processor may be configured to perform operations such as face detection, face tracking, face feature extraction, and image clustering on a face image in a video stored in the electronic device 400, perform operations such as face detection and facial feature extraction on a face image in a picture stored in the electronic device 400, and perform, based on facial features of the picture and a clustering result of the face image in the video, clustering on pictures stored in the electronic device 400.

The external memory interface 420 may be used to connect to an external storage card, for example, a Micro SD card, to extend a storage capability of the electronic device 400. The external storage card communicates with the processor 410 through the external memory interface 420, to implement a data storage function. For example, files such as music and a video are stored in the external storage card.

The internal memory 421 may be configured to store computer-executable program code. The executable program code includes instructions. The processor 410 runs the instructions stored in the internal memory 421, to perform various functional applications of the electronic device 400 and data processing. The internal memory 421 may include a program storage area and a data storage area. The program storage area may store an operating system, an application required by at least one function (for example, a sound play function or an image play function), and the like. The data storage area may store data (for example, audio data and an address book) and the like created during use of the electronic device 400.

In addition, the internal memory 421 may include a high-speed random access memory, and may further include a nonvolatile memory, for example, at least one magnetic disk storage device, a flash memory, or a universal flash storage (universal flash storage, UFS), and the like.

The electronic device 400 may implement an audio function such as music playing or recording by using the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may be further configured to: code and decode an audio signal. In some embodiments, the audio module 470 may be disposed in the processor 410, or some functional modules in the audio module 470 are disposed in the processor 410.

The speaker 470A, also referred to as a "horn", is configured to convert an audio electrical signal into a sound signal. The electronic device 400 may listen to music or answer a hands-free call by using the speaker 470A.

The receiver 470B, also referred to as an "earpiece", is configured to convert the audio electrical signal into the sound signal. When a call is answered or voice information is received by using the electronic device 400, the receiver 470B may be put close to a human ear to listen to a voice.

The microphone 4270C, also referred to as a "mike" or a "mic", is configured to convert a sound signal into an electrical signal. When making a call or sending voice information, a user may make a sound near the microphone 470C through the mouth of the user, to input the sound signal to the microphone 470C. At least one microphone 470C may be disposed in the electronic device 400. In some other embodiments, two microphones 470C may be disposed in the electronic device 400, to collect a sound signal and further implement a noise reduction function. In some other embodiments, three, four, or more microphones 470C may alternatively be disposed in the electronic device 400, to collect a sound signal, reduce noise, further identify a sound source, implement a directional recording function, and the like.

The headset jack 470D is configured to connect to a wired headset. The headset jack 470D may be the USB port 430, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 480A is configured to sense a pressure signal, and may convert the pressure signal into an electrical signal. In some embodiments, the pressure sensor 480A may be disposed on the display 494. There are a plurality of types of pressure sensors 480A, such as a resistive pressure sensor, an inductive pressure sensor, and a capacitive pressure sensor. The capacitive pressure sensor may include at least two parallel plates made of conductive materials. When force is applied to the pressure sensor 480A, capacitance between electrodes changes. The electronic device 400 determines pressure intensity based on the change in the capacitance. When a touch operation is performed on the display 494, the electronic device 400 detects intensity of the touch operation by using the pressure sensor 480A. The electronic device 400 may also calculate a touch location based on a detection signal of the pressure sensor 480A.

The gyro sensor 480B may be configured to determine a motion posture of the electronic device 400. In some embodiments, an angular velocity of the electronic device 400 around three axes (namely, axes x, y, and z) may be determined by using the gyro sensor 480B. The gyro sensor 480B may be configured to implement image stabilization during photographing. For example, when a shutter is pressed, the gyro sensor 480B detects an angle at which the electronic device 400 jitters, obtains, through calculation based on the angle, a distance for which a lens module needs to compensate, and allows the lens to cancel the jitter of the electronic device 400 through reverse motion, to implement image stabilization. The gyro sensor 480B may be further used in navigation and motion sensing game scenarios.

The barometric pressure sensor 480C is configured to measure barometric pressure. In some embodiments, the electronic device 400 calculates an altitude by using a value of the barometric pressure measured by the barometric pressure sensor 480C, to assist in positioning and navigation.

The magnetic sensor 480D includes a Hall sensor. The electronic device 400 may detect opening and closing of a flip cover by using the magnetic sensor 480D. In some embodiments, when the electronic device 400 is a clamshell phone, the electronic device 400 may detect opening and closing of a flip cover based on the magnetic sensor 480D, and further set, based on a detected opening or closing state of the flip cover, a feature such as automatic unlocking of the flip cover.

The acceleration sensor 480E may detect accelerations in various directions (usually on three axes) of the electronic device 400, and may detect magnitude and a direction of gravity when the electronic device 400 is static. The acceleration sensor 480E may be further configured to identify a posture of the electronic device, and is used in an application such as switching between a landscape mode and a portrait mode or a pedometer.

The distance sensor 480F is configured to measure a distance. The electronic device 400 may measure the distance in an infrared manner or a laser manner. In some embodiments, in a photographing scenario, the electronic device 400 may measure a distance through the distance sensor 480F to implement quick focusing.

The optical proximity sensor 480G may include, for example, a light-emitting diode (LED) and an optical detector, for example, a photodiode. The light-emitting diode may be an infrared light-emitting diode. The electronic device 400 emits infrared light by using the light-emitting diode. The electronic device 400 detects infrared reflected light from a nearby object by using the photodiode. When sufficient reflected light is detected, it may be determined that there is an object near the electronic device 400. When insufficient reflected light is detected, the electronic device 400 may determine that there is no object near the electronic device 400. The electronic device 400 may detect, by using the optical proximity sensor 480G, that the user holds the electronic device 400 close to an ear for a call, to automatically turn off a screen for power saving. The optical proximity sensor 480G may also be used in a smart cover mode or a pocket mode to automatically perform screen unlocking or locking.

The ambient light sensor 480L is configured to sense ambient light brightness. The electronic device 400 may adaptively adjust brightness of the display 494 based on the sensed ambient light brightness. The ambient light sensor 480L may also be configured to automatically adjust a white balance during photographing. The ambient light sensor 480L may also cooperate with the optical proximity sensor 480G to detect whether the electronic device 400 is in a pocket, to avoid an accidental touch.

The fingerprint sensor 480H is configured to capture a fingerprint. The electronic device 400 may use a feature of the collected fingerprint to implement fingerprint-based unlocking, application lock access, fingerprint-based photographing, fingerprint-based call answering, and the like.

The temperature sensor 480J is configured to detect a temperature. In some embodiments, the electronic device 400 executes a temperature processing policy based on the temperature detected by the temperature sensor 480J. For example, when the temperature reported by the temperature sensor 480J exceeds a threshold, the electronic device 400 lowers performance of a processor nearby the temperature sensor 480J, to reduce power consumption to implement thermal protection. In some other embodiments, when the temperature is less than another threshold, the electronic device 400 heats the battery 442 to prevent the electronic device 400 from being shut down abnormally due to a low temperature. In some other embodiments, when the temperature is less than still another threshold, the electronic device 400 boosts an output voltage of the battery 442 to avoid abnormal shutdown caused by a low temperature.

The touch sensor 480K is also referred to as a "touch panel". The touch sensor 480K may be disposed on the display 494, and the touch sensor 480K and the display 494 form a touchscreen, which is also referred to as a "touchscreen". The touch sensor 480K is configured to detect a touch operation performed on or near the touch sensor 480K. The touch sensor may transfer the detected touch operation to the application processor to determine a type of the touch event. A visual output related to the touch operation may be provided on the display 494. In some other embodiments, the touch sensor 480K may alternatively be disposed on a surface of the electronic device 400 at a location different from that of the display 494.

The bone conduction sensor 480M may obtain a vibration signal. In some embodiments, the bone conduction sensor 480M may obtain a vibration signal of a vibration bone of a human vocal-cord part. The bone conduction sensor 480M may also be in contact with a body pulse to receive a blood pressure beating signal.

In some embodiments, the bone conduction sensor 480M may also be disposed in a headset, to form a bone conduction headset. The audio module 470 may parse out a voice signal based on the vibration signal that is of the vibration bone of the vocal-cord part and that is obtained by the bone conduction sensor 480M, to implement a voice function. The application processor may parse heart rate information based on the blood pressure beating signal obtained by the bone conduction sensor 480M, to implement a heart rate detection function.

The button 490 includes a power button, a volume button, and the like. The button 490 may be a mechanical button, or may be a touch button. The electronic device 400 may receive a key input, and generate a key signal input related to a user setting and function control of the electronic device 400.

The motor 491 may generate a vibration prompt. The motor 491 may be configured to provide an incoming call vibration prompt, or may be configured to provide a touch vibration feedback. For example, touch operations performed on different applications (for example, photographing and audio play) may correspond to different vibration feedback effects. The motor 491 may also correspond to different vibration feedback effects for touch operations performed on different areas of the display 494. Different application scenarios (for example, a time reminder scenario, information receiving, an alarm clock, and a game) may also correspond to different vibration feedback effects. A touch vibration feedback effect may further be customized.

The indicator 492 may be an indicator lamp, and may be used to indicate a charging status or a power change; or may be configured to indicate a message, a missed call, a notification, and the like.

The SIM card interface 495 is configured to connect to a SIM card. The SIM card may be inserted into the SIM card interface 495 or removed from the SIM card interface 495, to implement contact with or separation from the electronic device 400. The electronic device 400 may support one or N SIM card interfaces, where N is a positive integer greater than 1. The SIM card interface 495 can support a nano-SIM card, a micro-SIM card, a SIM card, and the like. A plurality of cards may be simultaneously inserted into a same SIM card interface 495. The plurality of cards may be of a same type or different types. The SIM card interface 495 may be compatible with different types of SIM cards. The SIM card interface 495 may also be compatible with an external storage card. The electronic device 400 interacts with a network through the SIM card, to implement functions such as calling and data communication. In some embodiments, the electronic device 400 uses an eSIM, that is, an embedded SIM card. The eSIM card may be embedded in the electronic device 400, and cannot be separated from the electronic device 400.

It should be noted that if the second device is a server, the server includes a processor and a communications interface.

In this embodiment of this application, a specific structure of an execution body for executing the image feature extraction process and the image feature analysis process is not particularly limited, provided that a program that records code of the image feature extraction process and/or the image feature analysis process in the image processing method in this embodiment of this application can be run, to perform communication in the image feature extraction process and/or the image feature analysis process in the image processing method according to this embodiment of this application. For example, the execution body of an image processing method provided in this embodiment of this application may be a functional module that can invoke and execute a program in the first device, or an apparatus applied to the first device, for example, a chip. The execution body of an image processing method provided in this embodiment of this application may be a functional module that can invoke and execute a program in the second device, or an apparatus applied to the second device, for example, a chip.

In the foregoing application scenario and the corresponding examples, an example in which a plurality of photographing apparatuses (each photographing apparatus is loaded with a feature extraction network model) correspond to a cloud platform to complete the image processing task is used for description. To have a clearer understanding of this application, following embodiments are described by using an example in which one of the plurality of photographing apparatuses completes the image processing task with a corresponding cloud platform. The photographing apparatus may load a feature extraction network model, or may load a plurality of feature extraction network models.

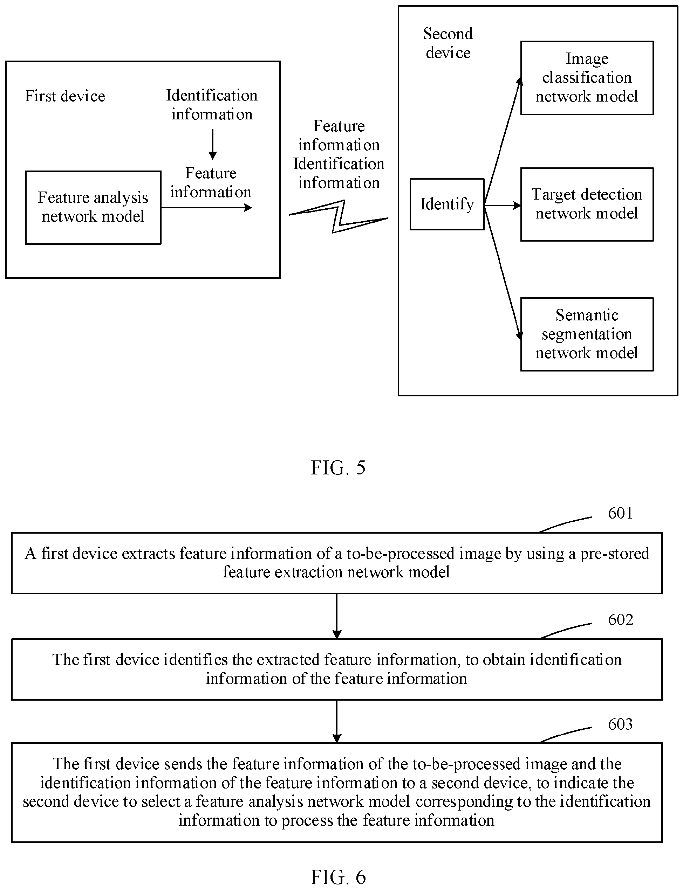

FIG. 5 is an example diagram of performing an image processing method by a first device and a second device according to an embodiment of this application. In the example diagram, the first device loads a feature analysis network model, the first device extracts feature information of a to-be-processed image by using the feature analysis network model, the first device generates identification information of the feature information, and the first device sends the feature information and the identification information to a second device. The second device loads an image classification network model, a target detection network model, and a semantic segmentation network model, the second device identifies the identification information of the received feature information, selects, based on the identification information of the received feature information, a feature analysis network model corresponding to the identification information, and inputs the feature information to the selected feature analysis network model, to complete a corresponding image processing task.

FIG. 6 is a schematic flowchart of performing an image processing method according to an embodiment of this application. As shown in the figure, the method is applied to a first device, and the method includes the following steps.

Step 601: The first device extracts feature information of a to-be-processed image by using at least one pre-stored feature extraction network model.

In this embodiment of this application, the feature extraction network model may include a VGG model, a ResNet model, an Inception model, and the like. Alternatively, the feature extraction network model may be another feature extraction network model other than the foregoing enumerated models. This is not limited in this embodiment of this application.

The feature information of the image includes a feature map obtained after the feature extraction network model in the first device processes the to-be-processed image.

Step 602: The first device identifies the extracted feature information, to obtain identification information of the feature information.

In this embodiment of this application, the feature extraction network model in the first device is used to extract the feature information of the image, and a feature analysis network model in a second device is used to perform a corresponding image processing task on the image based on the feature information of the image. However, there may be a plurality of image analysis network models in the second device to complete different image processing tasks. For example, the second device has a model A, a model B, and a model C. The model A is used to obtain an image classification result based on the feature information of the image, the model B is used to obtain a target detection result based on the feature information of the image, and the model C is used to obtain a semantic segmentation result based on the feature information of the image. After the image feature extraction network model in the first device extracts the feature information of the image, the first device may identify the feature information of the image based on a to-be-performed image processing task. In this way, after the second device receives the feature information of the image, the second device may determine, based on the identification information, whether to select the model A, the model B, or the model C to perform a following image processing task.

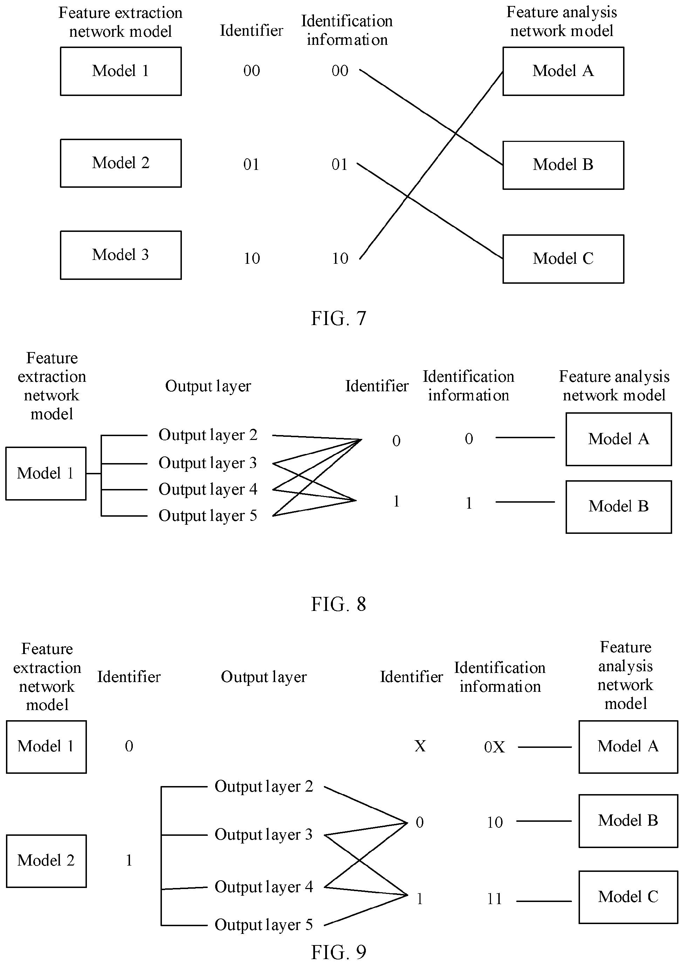

In actual application, the identification information of the feature information may be determined based on an image processing task to be executed. For example, identification information of the model A that is in the second device and that is used to obtain the image classification result based on the feature information of the image is 00, identification information of the model B that is in the second device and that is used to obtain the target detection result based on the feature information of the image is 01, and identification information of the model C that is in the second device and that is used to obtain the semantic segmentation result based on the feature information of the image is 11. The first device may select a proper feature extraction network model based on the image processing task to be performed on the to-be-processed image. Then, the first device identifies the extracted feature information based on the to-be-performed image processing task. Certainly, in actual application, the feature information may also be extracted and identified in another manner. For details, refer to related descriptions in the following FIG. 7 to FIG. 9.

When the image processing task performed on the to-be-processed image is image classification, the identification information of the feature information may be set to 00. When the image processing task performed on the to-be-processed image is target detection, the identification information of the feature information may be set to 01. When the image processing task performed on the to-be-processed image is semantic segmentation, the identification information of the feature information may be set to 11.

In actual application, the identification information of the feature information may be further generated based on other information. For details, refer to the following descriptions.

It should be noted that, in the foregoing examples, "0" and "1" are used as identification characters to form the identification information. In actual application, identification characters in another form may alternatively form the identification information.

Step 603: The first device sends the feature information of the to-be-processed image and the identification information of the feature information to a second device, to indicate the second device to select a feature analysis network model corresponding to the identification information to process the feature information.

In this embodiment of this application, when the first device and the second device are not a same device, the first device sends the feature information of the to-be-processed image and the identification information of the feature information to the second device. When the first device and the second device are a same device, the following cases may exist:

Case 1: The feature extraction network model is located in a first processor, and the feature analysis network model is located in a second processor.

That the first device sends the feature information of the to-be-processed image and the identification information of the feature information to a second device includes: The first processor of the first device sends the feature information of the to-be-processed image and the identification information of the feature information to the second processor of the first device.

Case 2: The feature extraction network model and the feature analysis network model are located in a same processor.

That the first device sends the feature information of the to-be-processed image and the identification information of the feature information to a second device includes: A feature extraction functional module of the first device sends the feature information of the to-be-processed image and the identification information of the feature information to a feature analysis functional module of the first device, where the feature extraction functional module stores the feature extraction network model, and the feature analysis functional module stores the feature analysis network model.

In this embodiment of this application, the first device indicates, by generating the identification information of the feature information of the to-be-processed image, the second device to select the corresponding feature analysis network model based on the identification information after receiving the identification information of the feature information, to complete the corresponding image processing task. Therefore, the feature information obtained by the feature analysis network model in the second device is matched feature information, to improve a problem that a multi-task image processing effect in the second device is poor.

In another embodiment of this application, the first device may obtain the identification information of the feature information in the following manner:

The first device obtains an identifier of a feature extraction network model used to extract the feature information.

The first device uses the identifier of the feature extraction network model used to extract the feature information as the identification information of the feature information.

In this embodiment of this application, the first device stores at least one feature extraction network model, presets an identifier for each feature extraction network model, and generates the identification information of the feature information based on the identifier of the feature extraction network model from which the feature information is obtained. Because one second device may have network connections to a plurality of first devices, that is, the second device may receive feature information sent by the plurality of first devices, even if the first device has only one feature extraction network model, a unique identifier needs to be set for the feature extraction network model.

Refer to FIG. 7. In an example of this embodiment, if three models, a model A, a model B and a model C are correspondingly disposed for image processing tasks in the second device, and the model A, the model B, and the model C have different requirements on feature information, to meet the requirements of the model A, the model B, and the model C on the feature information, three feature extraction network models may be set in the first device: a model 1, a model 2, and a model 3. The model 1 may satisfy the image processing task of the model B, the model 2 may satisfy the image processing task of the model C, and the model 3 may satisfy the image processing task of the model A. Certainly, in addition to the foregoing satisfaction relationship, there may be another case. For example, in addition to satisfying the foregoing described requirement of the model A, the feature information obtained by the model 3 may further meet the requirement of the model B. However, compared with a process of extracting the feature information by the model 1, a process of extracting the feature information by the model 3 occupies large memory, resulting in a waste of resources. In this case, to avoid problems of the large memory occupation and the waste of resources, a correspondence between the identification information and the feature analysis network model is set to a correspondence shown in FIG. 7. That is, the feature information extracted by the model 3 is input to the model A, and the feature information extracted by the model 1 is input to the model B.

When a user expects to perform the image processing task corresponding to the model A, the user may input the to-be-processed image to the model 3 in the first device based on the correspondence shown in FIG. 7. The model 3 in the first device outputs the feature information of the to-be-processed image and identification information 10 of the feature information, and the first device sends the feature information of the to-be-processed image and the identification information 10 of the feature information to the second device. After the second device receives the feature information and the corresponding identification information 10, the second device determines the model A as a target model based on the correspondence, and inputs the feature information to the model A, to obtain an image processing result desired by the user.

In another embodiment of this application, the first device may obtain the identification information of the feature information in the following manner:

The first device obtains an identifier of an output layer of the feature information, where the output layer of the feature information is a layer at which the feature information is output in the feature extraction network model used to extract the feature information.

The first device uses the identifier of the output layer of the feature information as the identification information of the feature information.

In this embodiment of this application, the feature extraction network model may have a plurality of layers. For example, a structure of the feature extraction network model may have a plurality of convolutional layers, a plurality of pooling layers and fully connected layers, and the like, and these layers exist in a form of the convolutional layer, the pooling layer, the convolutional layer, the pooling layer, ..., and the fully connected layer. The following relationship may exist between these layers: Output of an upper layer is input of a lower layer, and finally feature information of an image that is output by a layer is obtained. However, in actual application, a feature analysis network model not only requires output of a last layer, but also may require output of one or more intermediate layers. A feature analysis network model may not require output of a last layer, but requires output of one or more intermediate layers. Therefore, to meet a requirement of the feature analysis network model in the second device, a specific layer of the feature extraction network model in the first device may be set as the output layer to output the feature information of the image. In addition, corresponding identification information is generated based on the output layer of the output feature information, so that the second device selects a proper feature analysis network model.

For the feature extraction network model, layers (for example, the convolutional layer, the pooling layer, and the fully connected layer in the foregoing example) at which the feature information of the image can be output may be used as the output layer of the feature information.

The foregoing example of the feature extraction network model is merely used to describe the output layer in the feature extraction network model. The foregoing example of the feature extraction network model does not indicate that the structure of the feature extraction network model is limited. For example, the foregoing feature extraction network model may also be a VGG, a DenseNet, or a feature extraction network model of a feature pyramid structure.

Refer to FIG. 8. In an example of this embodiment, if two feature analysis network models, a model A and a model B are correspondingly disposed for image processing tasks in the second device, and a requirement of the image processing task corresponding to the model A on feature information is that an output layer 2 to an output layer 5 of a model 1 output the feature information, and a requirement of the image processing task corresponding to the model B on the feature information is that the output layer 3 to the output layer 5 of the model 1 output the feature information, four output layers exist in the feature extraction network model in the first device: the output layer 2, the output layer 3, the output layer 4, and the output layer 5. Identification information corresponding to the feature information of the output layer 2 to the output layer 5 of the model 1 may be set to 0, and identification information corresponding to the feature information of the output layer 3 to the output layer 5 of the model 1 may be set to 1.

Certainly, in actual application, the first device may further include another feature extraction network model. In this embodiment of this application, only the model 1 is used to describe how to use the identifier of the output layer as the identification information of the feature information.

In another embodiment of this application, when the first device has at least two feature extraction network models, and at least one of the feature extraction network models includes a plurality of output layers, the first device may obtain the identification information of the feature information in the following manner:

The first device obtains an identifier of a feature extraction network model used to extract the feature information.

The first device obtains an identifier of an output layer of the feature information, where the output layer of the feature information is a layer at which the feature information is output in the feature extraction network model used to extract the feature information.

The first device uses the identifier of the feature extraction network model used to extract the feature information and the identifier of the output layer of the feature information as the identification information of the feature information.

Refer to FIG. 9. In an example of this embodiment, the first device has two feature extraction network models: a model 1 and a model 2, and an identifier of the model 1 may be 0, and an identifier of the model 2 may be 1. The model 1 corresponds to one output layer, and the model 2 corresponds to four output layers: an output layer 2, an output layer 3, an output layer 4, and an output layer 5. An identifier of the output layer 2 to the output layer 4 of the model 2 is 0, and an identifier of the output layer 3 to the output layer 5 of the model 2 is 1. Correspondingly, identification information of feature information obtained by the model 1 is 0X (which may be 00 or 01), identification information of feature information obtained at the output layer 2 to the output layer 4 of the model 2 is 10, and identification information of feature information obtained at the output layer 3 to the output layer 5 of the model 2 is 11. The following correspondence exists based on a requirement of each feature analysis network model in the second device on the feature information: 00-a model A, 10-a model B, 11-a model C, or 01-a model A, 10-a model B, and 11-a model C.

When a user needs to perform the image processing task corresponding to the model B on a to-be-processed image, the user searches for the correspondence, and determines that the feature information obtained at the output layer 2 to the output layer 4 of the model 2 in the first device is required. The user may control, on the first device side, the output layer 2 to the output layer 4 of the model 2 to output the feature information, or the user may send, on the second device side, an instruction to the first device by using the second device, to control the output layer 2 to the output layer 4 of the model 2 in the first device to output the feature information. After the output layer 2 to the output layer 4 of the model 2 in the first device output the feature information, an identifier 1 of the extraction model of the feature information may be generated, the identifier 0 of the output layer of the feature information is generated, and 10 is used as the identification information of the feature information. The first device sends the feature information and the identification information 10 to the second device, and the second device inputs the feature information to the model B based on the identification information 10, to obtain an image processing result.

In actual application, whether the identifier of the feature extraction network model used to extract the feature information is used as the identification information of the feature information, the identifier of the output layer of the feature information is used as the identification information of the feature information, or both the identifier of the feature extraction network model and the identifier of the output layer of the feature information are used as the identification information of the feature information may be set based on an actual situation.

In another embodiment of this application, to have a clearer understanding of the identification information of the feature information, the following rule may be set:
A field corresponding to the identification information is divided into a first field used to represent the feature extraction network model used to extract the feature information, and a second field used to represent the output layer of the feature information.

The first field occupies m bytes, and the second field occupies n bytes. In actual application, a value of m may be determined based on a quantity of feature extraction network models in the first device, and a value of n may be determined based on a quantity of output forms of the feature extraction network model.

To make this embodiment of this application scalable in an implementation process, m and n may be set to large values. For example, m is set to four bytes, and a maximum of 2⁴ feature extraction network models may be covered. n is set to 4 bytes, and the feature extraction network model with a maximum of 2⁴ output forms may be covered. The output form represents a set formed by output layers that output the feature information, for example, a set formed by output layers corresponding to a feature extraction network model is four different output forms: {output layer 1}, {output layer 3}, {output layer 2 to output layer 4}, and {output layer 3 to output layer 5}. In actual application, m and n may alternatively be other values. This is not limited in this application. When there are a large quantity of feature analysis network models on the second device side, there is sufficient identification information to form a one-to-one correspondence with the feature analysis network models.

When the first device sends the identification information of the feature information to the second device, the first field and the second field may be used as an entire field. In the entire field, m consecutive bytes represent the feature extraction network model used to extract the feature information, and n consecutive bytes represent the output layer of the feature information. Certainly, the entire field may further include bytes representing another meaning. A total quantity of bytes of the entire field is not limited in this embodiment of this application.

The foregoing example is merely used as an example. In actual application, the first field and the second field may be used as two completely independent fields. For example, the first independent field includes the first field, and may further include at least one byte to distinguish whether a currently independent field is an identifier of the extraction model or an identifier of the output layer. The second independent field includes the second field, and may further include at least one byte used to distinguish whether a currently independent field is an identifier of the extraction model or an identifier of the output layer. The first device sends the first independent field and the second independent field as the identification information of the feature information to the second device.

For example, a first byte in the first independent field is 0, which indicates that the m consecutive bytes stored in the independent field are the identifier of the extraction model, and the independent field further includes m connected bytes used to represent the feature extraction network model used to extract the feature information. A first byte in the second independent field is 1, which indicates that n consecutive bytes stored in the independent field are the identifier of the output layer, and the independent field further includes n connected bytes used to represent the output layer of the feature information.

The foregoing identification information generation method is merely used as an example. In actual application, the identification information may be generated in another manner. This is not limited in this embodiment of this application.

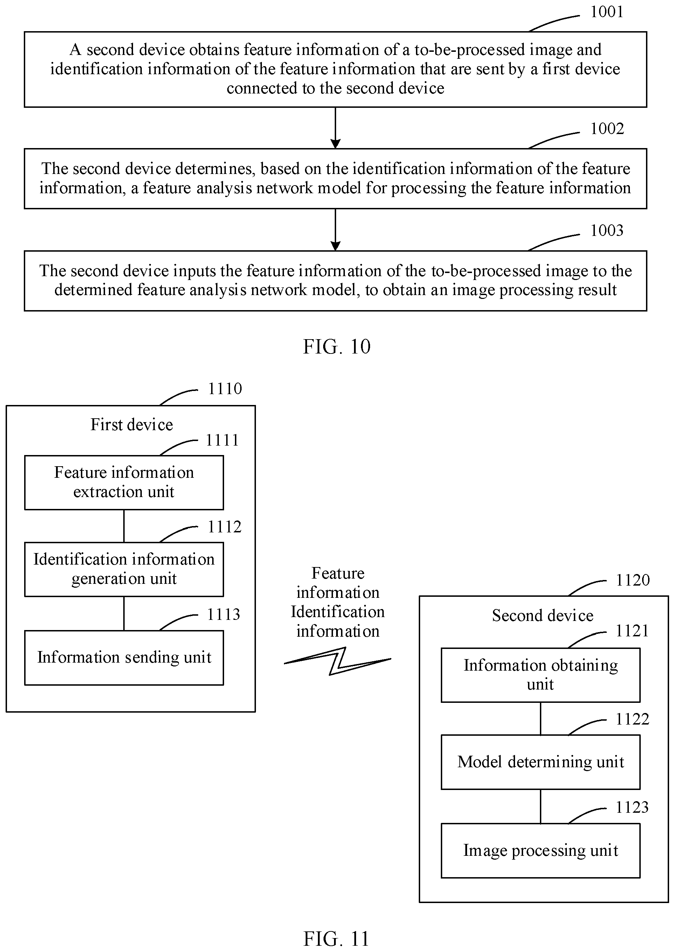

FIG. 10 is a schematic flowchart of an image processing method according to an embodiment of this application. As shown in the figure, the method is applied to a second device, and the method includes the following steps.

Step 1001: A second device obtains feature information of a to-be-processed image and identification information of the feature information that are sent by a first device connected to the second device.

Step 1002: The second device determines, based on the identification information of the feature information, a feature analysis network model for processing the feature information.

Step 1003: The second device inputs the feature information of the to-be-processed image to the determined feature analysis network model, to obtain an image processing result.

In this embodiment of this application, the second device needs to cooperate with the first device to complete an image processing task. The first device completes an image feature extraction task, and the second device analyzes the feature information extracted by the first device, to obtain the image processing result. Therefore, there is a connection between the first device and the second device, and the connection may be a wired connection or a wireless connection. As described above, the identification information exists in the feature information extracted by the first device, and the identification information is used to indicate the second device to select a proper feature analysis network model to complete a corresponding image processing task. After receiving the identification information of the feature information of the to-be-processed image, the second device needs to determine, based on the identification information, the feature analysis network model for processing the feature information.

Corresponding to the methods for obtaining the identification information of the feature information in embodiments shown in FIG. 7, FIG. 8, and FIG. 9, the identification information of the feature information obtained by the second device includes:
an identifier of a feature extraction network model used to extract the feature information; and/or
an identifier of an output layer of the feature information, where the output layer of the feature information is a layer at which the feature information is output in the feature extraction network model used to extract the feature information.

In another embodiment of this application, that the second device determines, based on the identification information of the feature information, a feature analysis network model for processing the feature information includes:

The second device obtains a correspondence between the identification information and the feature analysis network model; and
the second device uses, based on the correspondence, a feature analysis network model corresponding to the identification information of the feature information as the feature analysis network model for processing the feature information.

It should be noted that the correspondence not only may include the correspondence between the identification information and the feature analysis network model, but also may include a correspondence of other information. For example, in the example shown in FIG. 3, the described correspondence is the correspondence between the first device, the feature extraction network model stored in the first device, the identification information, the image processing task, and the feature analysis network model stored in the second device.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

In embodiments of this application, the first device and the second device may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division, and may be other division in an actual implementation. An example in which each functional unit is obtained through division based on each corresponding function is used below for description.

Refer to FIG. 11. A first device 1110 includes:
a feature information extraction unit 1111, configured to extract feature information of a to-be-processed image by using at least one pre-stored feature extraction network model;
an identification information generation unit 1112, configured to identify the extracted feature information, to obtain identification information of the feature information; and
an information sending unit 1113, configured to send the feature information of the to-be-processed image and the identification information of the feature information to a second device, to indicate the second device to select a feature analysis network model corresponding to the identification information to process the feature information.

In another embodiment of this application, the identification information generation unit 1112 is further configured to:
obtain an identifier of a feature extraction network model used to extract the feature information; and use the identifier of the feature extraction network model used to extract the feature information as the identification information of the feature information.

In another embodiment of this application, the identification information generation unit 1112 is further configured to:
obtain an identifier of an output layer of the feature information, where the output layer of the feature information is a layer at which the feature information is output in the feature extraction network model used to extract the feature information; and use the identifier of the output layer of the feature information as the identification information of the feature information.

In another embodiment of this application, the identification information generation unit 1112 is further configured to:
obtain an identifier of a feature extraction network model used to extract the feature information;
obtain an identifier of an output layer of the feature information, where the output layer of the feature information is a layer at which the feature information is output in the feature extraction network model used to extract the feature information; and
use the identifier of the feature extraction network model used to extract the feature information and the identifier of the output layer of the feature information as the identification information of the feature information.

It should be noted that content such as information exchange between the units in the first device and the execution processes thereof is based on a same concept as the method embodiments of this application. For specific functions and technical effects of the content, refer to the method embodiments. Details are not described herein again.

Refer to FIG. 11. A second device 1120 includes:
an information obtaining unit 1121, configured to obtain feature information of a to-be-processed image and identification information of the feature information that are sent by a connected first device;
a model determining unit 1122, configured to determine, based on the identification information of the feature information, a feature analysis network model for processing the feature information; and
an image processing unit 1123, configured to input the feature information of the to-be-processed image to the determined feature analysis network model, to obtain an image processing result.

In another embodiment of this application, the model determining unit 1122 is further configured to:
obtain a correspondence between the identification information and the feature analysis network model; and use, based on the correspondence, a feature analysis network model corresponding to the identification information of the feature information as the feature analysis network model for processing the feature information.

In another embodiment of this application, the identification information of the feature information includes:
an identifier of a feature extraction network model used to extract the feature information; and/or
an identifier of an output layer of the feature information, where the output layer of the feature information is a layer at which the feature information is output in the feature extraction network model used to extract the feature information.

It should be noted that content such as information exchange between the units in the second device and the execution processes thereof is based on a same concept as the method embodiments of this application. For specific functions and technical effects of the content, refer to the method embodiments. Details are not described herein again.

It may be clearly understood by a person skilled in the art that, for the purpose of convenient and brief description, division of the foregoing functional units is taken as an example for description. In actual application, the foregoing functions can be allocated to different functional units and implemented according to a requirement, that is, an inner structure of the first device is divided into different functional units to implement all or part of the functions described above. Functional units in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units are merely for ease of distinguishing between the functional units, but are not intended to limit the protection scope of this application. For a specific working process of the units in the foregoing system, refer to a corresponding process in the foregoing method embodiments. Details are not described herein again.

An embodiment of this application further provides a computer-readable storage medium. The computer-readable storage medium stores a computer program. When the computer program is executed by a processor, the steps in the foregoing method embodiments can be implemented.

An embodiment of this application further provides a computer program product. When the computer program product runs on a first device, the first device is enabled to perform the steps in the foregoing method embodiments.

When the integrated unit is implemented in the form of a software functional unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by a processor, the steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to a first device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, the computer-readable medium cannot be the electrical carrier signal or the telecommunications signal according to legislation and patent practices.

An embodiment of this application further provides a chip system. The chip system includes a processor, the processor is coupled to a memory, and the processor executes a computer program stored in the memory, to implement the steps in any method embodiment of this application. The chip system may be a single chip or a chip module including a plurality of chips.

In the foregoing embodiments, the descriptions of each embodiment have respective focuses. For a part that is not described in detail or recorded in an embodiment, refer to related descriptions in other embodiments.

A person of ordinary skill in the art may be aware that, in combination with the examples described in embodiments disclosed in this specification, units and steps of methods may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image processing method, comprising:
extracting, by a first device, feature information of a to-be-processed image by using at least one pre-stored feature extraction network model;
identifying, by the first device, the extracted feature information, to obtain identification information of the feature information; and
sending, by the first device, the feature information of the to-be-processed image and the identification information of the feature information to a second device, to indicate the second device to select a feature analysis network model corresponding to the identification information to process the feature information.

2. The method according to claim 1, wherein the identifying, by the first device, the extracted feature information, to obtain identification information of the feature information comprises:
obtaining, by the first device, an identifier of a feature extraction network model used to extract the feature information; and
using, by the first device, the identifier of the feature extraction network model used to extract the feature information as the identification information of the feature information.

3. The method according to claim 1, wherein the identifying, by the first device, the extracted feature information, to obtain identification information of the feature information comprises:
obtaining, by the first device, an identifier of an output layer of the feature information, wherein the output layer of the feature information is a layer at which the feature information is output in the feature extraction network model used to extract the feature information; and
using, by the first device, the identifier of the output layer of the feature information as the identification information of the feature information.

4. The method according to claim 1, wherein the identifying, by the first device, the extracted feature information, to obtain identification information of the feature information comprises:
obtaining, by the first device, an identifier of a feature extraction network model used to extract the feature information;
obtaining, by the first device, an identifier of an output layer of the feature information, wherein the output layer of the feature information is a layer at which the feature information is output in the feature extraction network model used to extract the feature information; and
using, by the first device, the identifier of the feature extraction network model used to extract the feature information and the identifier of the output layer of the feature information as the identification information of the feature information.

5. An image processing method, comprising:
obtaining, by a second device, feature information of a to-be-processed image and identification information of the feature information that are sent by a first device connected to the second device;
determining, by the second device based on the identification information of the feature information, a feature analysis network model for processing the feature information; and
inputting, by the second device, the feature information of the to-be-processed image to the determined feature analysis network model, to obtain an image processing result.

6. The method according to claim 5, wherein the determining, by the second device based on the identification information of the feature information, a feature analysis network model for processing the feature information comprises:
obtaining, by the second device, a correspondence between the identification information and the feature analysis network model; and
using, by the second device based on the correspondence, a feature analysis network model corresponding to the identification information of the feature information as the feature analysis network model for processing the feature information.

7. The method according to claim 5, wherein the identification information of the feature information comprises:
an identifier of a feature extraction network model used to extract the feature information; and/or
an identifier of an output layer of the feature information, wherein the output layer of the feature information is a layer at which the feature information is output in the feature extraction network model used to extract the feature information.

8. An electronic device, wherein the electronic device comprises a processor, and the processor is configured to run a computer program stored in a memory, to implement the method according to any one of claims 1 to 4.

9. An electronic device, wherein the electronic device comprises a processor, and the processor is configured to run a computer program stored in a memory, to implement the method according to any one of claims 5 to 7.

10. An image processing system, comprising at least one electronic device according to claim 8 and at least one electronic device according to claim 9.

11. A chip system, wherein the chip system comprises a processor, the processor is coupled to a memory, and the processor is configured to run a computer program stored in the memory, to implement the method according to any one of claims 1 to 4 and/or the method according to any one of claims 5 to 7.
